# DEMANDE DE BREVET EUROPEEN

(11) **EP 1 936 228 A1**
(43) Date de publication de la demande: **25.06.2008**
(21) Numéro de dépôt: 07122452.1
(22) Date de dépôt: 06.12.2007
(51) Int. Cl.: F16D 65/34

(54) **Système de commande à câbles d'un frein de stationnement automatique**

(30) Priorité: 20.12.2006 FR 0611169
(71) Demandeur: Robert Bosch GmbH, 70442 Stuttgart (DE)
(72) Inventeur: Caruso, Corrado, 70121, BARI (IT); Tristano, Nicola, 75100, MATERA (IT)
(74) Mandataire: Hurwic, Aleksander Wiktor

(57) **Abrégé**

L'invention concerne un système de commande frein comprenant au moins deux câbles (13 et 14) destinés chacun à communiquer une force de commande à un dispositif de freinage d'un véhicule. Un moteur (1) est prévu pour communiquer des forces de traction aux câbles (13, 14) par l'intermédiaire d'un dispositif de traction réducteur de vitesse (40) conçu pour égaliser les forces de traction sur les deux câbles. De plus, on peut prévoir que le dispositif de traction (40) n'est pas fixé de manière rigide au véhicule.
Application: Frein de stationnement automatique pour véhicule automobile.

## Description

L'invention concerne un système de traction par câbles pour la commande d'un système de frein et notamment un système applicable à un frein de stationnement automatique pour véhicule automobile.

Dans les techniques connues de freins de stationnement automatiques pour véhicules automobiles, on utilise couramment plusieurs câbles de traction (typiquement deux câbles) pour transmettre les forces de commande de freinage aux dispositifs de freinage des véhicules (tels que les freins à disques). La plupart de ces systèmes sont basés sur l'utilisation de réducteurs de vitesse irréversibles. Ils ont une efficacité relativement faible et nécessitent souvent des moteurs relativement puissants qui doivent être alimentés par un courant électrique important.

Pour fournir une force de freinage déterminée avec précision, ces systèmes ne peuvent pas utiliser efficacement la mesure du courant d'alimentation du moteur de commande en raison de l'échauffement du moteur et de l'efficacité du réducteur qui affectent la force de freinage.

De plus, dans de tels systèmes, on doit prévoir la compensation des effets thermiques au niveau des dispositifs de freinage, lors du refroidissement après l'arrêt du véhicule. En effet, il est courant que, dans un véhicule équipé d'un système de freinage de stationnement automatique, celui-ci soit mis en fonctionnement alors que les organes de freinage sont chauds voire même à température relativement élevée. Ces organes sont donc dans un état dilaté lorsque le système de frein de stationnement automatique est mis en fonctionnement. Dans un véhicule où le frein de stationnement agit sur un système de frein à disque, c'est le disque et les garnitures de freins qui sont chauds. Après fonctionnement du frein de stationnement automatique, durant l'arrêt du véhicule, le disque et les garnitures de freins refroidissent et diminuent de volumes. La force de freinage diminue en raison du rétrécissement des garnitures et du disque. Ceci peut induire un desserrage du frein et éventuellement une libération du véhicule.

L'objet de l'invention concerne un frein de stationnement automatique à commande par câbles. Sa fonction principale est de tirer sur une paire de câbles en égalisant les forces de traction sur les deux câbles même si leurs courses mortes sont différentes ou même si leurs élasticités respectives, ou les élasticités des dispositifs de freinage qu'ils commandent sont différentes. De plus, le système selon l'invention peut être équipé de moyens de compensation thermique simples et efficaces qui sont utiles lors de la relaxation thermique du système.

Le système de l'invention trouvera une utilisation préférentielle dans les freins de stationnement automatiques pour voitures et pour camions légers.

L'invention concerne donc un système de commande frein comprenant au moins deux câbles destinés chacun à communiquer une force de commande à un dispositif de freinage d'un véhicule. Un moteur électrique est prévu pour communiquer des forces de traction à ces câbles par l'intermédiaire d'un dispositif de traction réducteur de vitesse. Selon l'invention, le dispositif de traction réducteur de vitesse n'est pas fixé de manière rigide au véhicule.

Selon une forme de réalisation, ce dispositif de traction est ancré au châssis du véhicule, et est mobile selon une direction linéaire. Il peut être alors ancré au train arrière du véhicule.

Selon une forme de réalisation préférée, ledit dispositif de traction comporte un système de traction à doubles poulies ainsi qu'un système réduction de vitesse par engrenages situé à l'intérieur des poulies.

De façon générale on prévoit qu'une traction sur un premier desdits câbles est commandée par son enroulement sur une première poulie.

On peut alors prévoir que le deuxième desdits câble est fixé au boîtier du dispositif de traction.

On peut également prévoir qu'une traction sur le deuxième desdits câbles est commandée par son enroulement sur une deuxième poulie.

Selon une forme de réalisation préférée du dispositif de traction réducteur de vitesse, la première et la deuxième poulies sont coaxiales.

L'invention prévoit une forme de réalisation avantageuse selon laquelle le moteur électrique est couplé audit dispositif de traction par l'intermédiaire d'un système d'engrenages coniques.

Dans ce cas, on peut prévoir que l'arbre dudit moteur possède un engrenage conique qui entraîne une couronne tronc conique dentée.

Avantageusement, l'invention prévoit d'insérer un dispositif à ressort dans la chaîne de transmission des forces de freinage. Ce dispositif à ressort est, de préférence, pré chargé à une valeur de force correspondant à la force de freinage minimale exigée.

Selon le système de l'invention, il suffit de ne prévoir qu'un seul dispositif à ressort inséré sur l'un desdits câbles.

Selon une forme de réalisation préférée de l'invention, ce dispositif à ressort comporte un boîtier cylindrique contenant un ressort situé selon l'axe du boîtier entre une première extrémité et une deuxième extrémité du boîtier. La première extrémité possède un bouchon à travers lequel passe un câble et une extrémité de la gaine dudit câble. Le ressort est en appui sur une rondelle mobile axialement et qui s'appuie elle-même sur le bouchon ou sur ladite extrémité de gaine. Le bouchon ou la gaine forment une première butée. La deuxième extrémité du boîtier possède un couvercle mobile axialement pour régler la pré charge du ressort en coopération avec la première butée.

Pour permettre le réglage de la pré charge, le couvercle est vissé sur la deuxième extrémité du boîtier.

Par ailleurs, le boîtier peut comporter une deuxième butée permettant de limiter le déplacement de la rondelle en mode compression.

Le système de freinage selon l'invention est avantageusement un frein de stationnement automatique.

Le dispositif de freinage sur lequel il agit peut être un frein à disque du véhicule.

Il peut également agir sur un frein à tambour.

Les différents objets et caractéristiques de l'invention apparaîtront plus clairement dans la description qui va suivre et faite à titre d'exemple en liaison avec les figures annexées qui représentent:
- la figure 1, une vue générale en perspective d'un exemple de réalisation d'un système de traction par câbles selon l'invention pour la commande d'un système de frein de stationnement automatique,
- la figure 2, une vue détaillée avec arrachement partiel de l'ensemble moteur/dispositif de traction réducteur de vitesse du système de la figure 1,
   la figure 3, une courbe représentant la force de freinage en fonction de la course de déplacement du dispositif de transmission de force dans le cas d'une application à un frein à disque,
- les figures 4a et 4b, le fonctionnement d'un système de frein de stationnement automatique selon l'invention appliqué à un frein à disque,
- les figures 5a à 5c, le fonctionnement d'un système de frein de stationnement automatique selon l'invention appliqué à un frein à tambour.

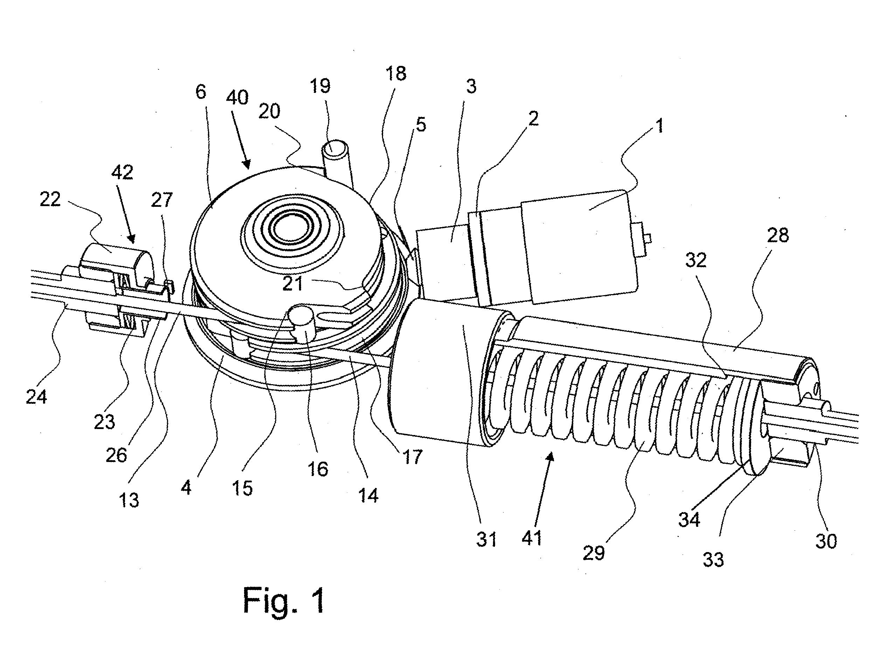

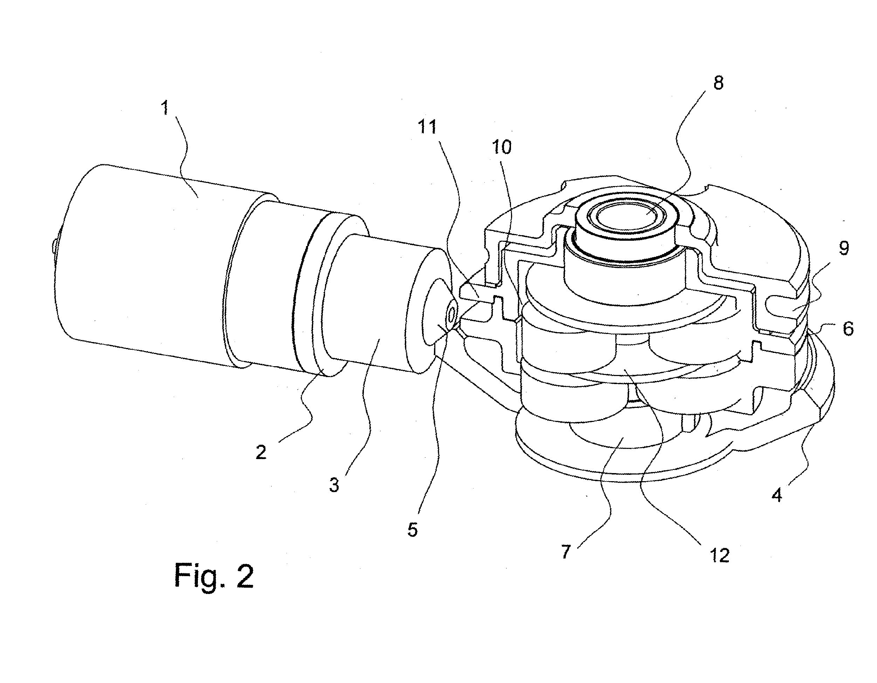

En se reportant aux figures 1 et 2, on va donc décrire un exemple de réalisation du système de l'invention.

Sur la figure 1, on voit les câbles 13 et 14 qui sont destinés à être couplés à des dispositifs de freinage d'un véhicule. Ces dispositifs de freinage peuvent être des freins à disques qui équipent deux roues arrière de droite et de gauche d'un véhicule. Le freinage s'obtient en exerçant une traction sur les deux câbles et il est opportun que les efforts exercés sur les deux câbles soient quasiment identiques pour obtenir le même effet de freinage sur les deux roues de droite et de gauche.

Un moteur électrique 1 permet de générer les forces de commande de freinage du système. Ce moteur est par exemple un moteur à courant continu qui permet en mesurant le courant d'alimentation de connaître le couple de forces fourni par le moteur. L'arbre du moteur peut être équipé d'un détecteur de position angulaire 2.

On peut également prévoir un dispositif de verrouillage 3 qui permet de bloquer la rotation de l'arbre du moteur dans l'un ou les deux sens de rotation lorsque le moteur n'est pas alimenté. Ce système de verrouillage peut être remplacé par un système de transmission à roue libre commutable ou par un système d'embrayage/débrayage. On peut également prévoir un système de blocage à commande électrique.

On notera qu'un système de blocage de la rotation de l'arbre moteur est notamment utile dans le cas où la rotation du dispositif de traction qui va être décrit ci-après est réversible c'est-à-dire qu'une traction sur le câble est susceptible de faire tourner le moteur.

Le moteur est couplé mécaniquement à un dispositif de traction réducteur de vitesse 40. Ce couplage se fait avantageusement à l'aide d'un système par friction ou par engrenages 4-5.

L'axe du moteur 1 peut être parallèle aux axes des roues d'entraînement du dispositif de traction réducteur de vitesse 40 ou être avantageusement orthogonal à ces axes. La figure 1 représente un exemple de réalisation où l'axe du moteur est orthogonal aux axes du dispositif de traction 40. L'axe du moteur est alors équipé d'un engrenage conique 5 et entraîne en rotation une couronne dentée 4 possédant une surface d'attaque tronc conique.

Le dispositif de traction 40 possède un système de poulies doubles 6 entraînées par un système d'engrenages coaxiaux dans lequel l'axe 7 (voir figure 2) est couplé à l'arbre moteur par la couronne dentée 4 et par l'engrenage conique 5, et dans lequel l'axe de sortie 8 est couplé à une première poulie 9. Dans ce dispositif, l'axe d'entrée 7 tourne donc à grande vitesse et l'axe de sortie 8 tourne à faible vitesse mais avec un couple élevé.

Par ailleurs, le dispositif de traction est équipé d'une deuxième poulie 11 coaxiale avec la première poulie 9.

Ce dispositif de traction est de type réducteur à haute efficacité de type connu tel qu'un réducteur planétaire 12 simple ou multiple.

Un tel agencement garantit que le couple de forces appliqué à l'axe de sortie 8 et à la poulie de sortie 9 est équilibré par le couple de force appliqué au dispositif 10.

En réalité le couple d'entrée est égal à la différence des deux couples de poulies 9 et 11. Mais la différence entre les deux couples des deux poulies est négligeable si le rapport des engrenages est suffisamment élevé et cette différence peut être compensée comme cela sera expliqué ci-après.

Les deux poulies coaxiales 9, 11 ont des diamètres pratiquement égaux et permettent d'enrouler partiellement sur chacune d'elles les câbles 13, 14.

Le réducteur est avantageusement placé à l'intérieur des poulies 9 et 11 et on voit donc sur les figures 1 et 2 que sa conception est très compacte. Les poulies sont placées côte à côte ce qui réduit les couples parasites.

Le long de la circonférence des poulies, une cannelure spéciale telle que 15 est créée pour recevoir une tête de traction d'extrémité de câble , telle que 16, pour permettre une traction du câble quand les poulies tournent.

Avantageusement, les diamètres des deux poulies sont choisies pour adapter exactement les forces de traction sur les deux câbles, compensant ainsi la petite différence de couples précédemment expliquée.

L'utilisation d'un dispositif de traction réversible dans le dispositif à doubles poulies garantit une égalisation parfaite des forces sur les deux câbles même si l'équilibre est perturbé après l'application des forces.

Les poulies comportent une rainure telle que 17 sur une partie de leur circonférence (pratiquement sur la moitié de leur circonférence). La hauteur des flancs de ces rainures est notablement réduite sur une portion 18 de la circonférence des poulies de manière à réduire le rayon de la poulie dans cette portion et à fournir deux butées angulaires telle que 21 qui limitent la rotation des poulies lorsqu'elles viennent en butée contre une cale 19 qui est fixée au boîtier.

La butée 20 d'un côté détermine une position initiale pour la traction d'un câble. La butée 21 de l'autre côté est une butée de fin course de traction du câble. Cette butée 21 ne devrait jamais être touchée. Cette butée sera utilisée seulement si l'un des deux câbles casse et pour assurer que le système puisse transmettre une force de traction à l'autre câble.

Avantageusement, on prévoit un dispositif à ressort 41 d'absorption des forces de traction permettant de stocker l'énergie de freinage du système. Ce dispositif est représenté sur la figure 1 et comporte un ressort hélicoïdal 29 contenu dans un boîtier cylindrique 28. Une rondelle 34 peut se déplacer axialement entre les deux butées 32 et 33, où la butée 32 est facultative.

La pré charge du dispositif est ajustée par l'intermédiaire du chapeau fileté 31 tandis que la course de la rondelle 2 peut être ajustée à l'aide de l'embout fileté 33.

Selon une forme préférée de réalisation du dispositif, la course du dispositif est définie par la course maximum qui sera produite sur les deux câbles pendant une relaxation thermique des freins.

Le dispositif à ressort 41 est monté le long du câble de frein 14. La gaine 30 contenant le câble 14 traverse l'embout 33 et est en appui sur la rondelle 34. Par ailleurs, le ressort 29 est en appui, par l'intermédiaire de l'embout 31, contre le boîtier du réducteur 40.

Le dispositif est mis en application dans la chaîne de frein de stationnement entre le dispositif produisant la force du frein de stationnement et le dispositif de freinage (garnitures de frein).

Dans le dispositif à ressort 41, on a représenté un ressort 29, mais il pourrait s'agir d'un empilement de disques ressorts de rondelles belleville ou de tout autre dispositif élastique, un élastomère par exemple.

L'élasticité du ressort 29 est, de préférence, similaire ou supérieure à la somme des élasticités des câbles de transmission des forces et des dispositifs de freinage.

Avantageusement, au moins une des deux butées 31 ou 32 du ressort peut être préréglée exactement pour appliquer, si nécessaire, une précontrainte au ressort 29.

L'équilibre des forces appliquées par le dispositif de traction sur les deux câbles 13 et 14 et les forces de réaction exercées par les gaines des câbles permettent de placer le dispositif à ressort 41 sur l'un des deux câbles pour compenser les pertes sur les deux câbles.

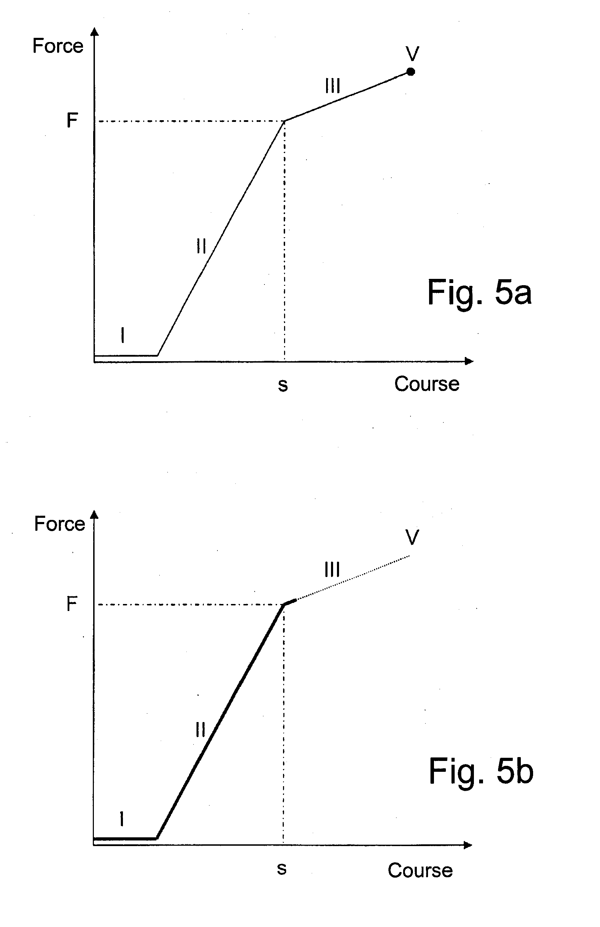

En cas d'application dans un frein à tambour, ce dispositif à ressort sera employé pour éviter l'excès de force de maintien qui se produit dans ce genre de freins lorsqu'ils se refroidissent et après application du frein de stationnement. Dans ce cas-ci la deuxième butée 32 n'est pas utile. Le fonctionnement dans une application à un frein à tambour sera décrit ultérieurement en se reportant aux figures 5a à 5c.

On peut également prévoir un dispositif de mesure de la traction exercée par les câbles. Par exemple, un dispositif de mesure 42 peut être placé entre la gaine du câble 13 et le boîtier du réducteur 40. Le câble 13 traverse ce dispositif et l'extrémité 24 de la gaine du câble 13 appuie sur le dispositif de mesure. Celui-ci comporte un élément élastique 23 (ressort, empilement de disques ressorts, élastomère) contenu dans un boîtier 22. L'élément élastique 23 est raide et compact puisque seulement une déformation limitée est nécessaire pour la détection de la force de traction. Un élément cylindrique ou douille 26 couplée au ressort 23 émerge du boîtier et peut se déplacer le long du câble en fonction de la traction exercée. Un capteur de déplacement 27 mesure le déplacement de cette douille 26. Ce capteur peut être avantageusement un capteur à effet Hall.

De cette façon le mouvement du câble peut être mesuré sans interrompre le câble.

En variante de réalisation, la mesure de la tension mécanique dans le câble s'effectue au niveau du ressort 29.

On notera que le dispositif à ressort 41 et le dispositif de mesure 42 peuvent être installés, dans une variante de réalisation, chacun sur un câble de traction 13 et 14 ou sur le même câble selon la disposition qui convient le mieux.

Le dispositif de traction de câbles à poulie double de l'invention est donc d'égaliser sur les deux câbles l'effet de traction. Ce dispositif n'est pas fixé et le couple de réaction du dispositif est utilisé pour tirer un des câbles, alors que l'autre câble est tiré par l'axe de sortie du dispositif de traction.

Un autre principe utilisé dans ce dispositif est que les extrémités de la gaine d'un câble sont en butée et que la réaction de la gaine d'un câble est égale à la tension du câble.

De plus, ce système permet de mesurer la force exercée sur l'une des gaines au lieu que l'on soit obligés de prévoir une interruption des câbles pour mesurer la force exercée sur le câble.

De même, le ressort d'absorption des forces du dispositif à ressort au lieu d'être inséré dans une interruption du câble, peut être placé entre la gaine du câble et sa butée. Son élasticité sera répartie entre les deux câbles en raison de l'effet égalisateur de forces du dispositif de traction.

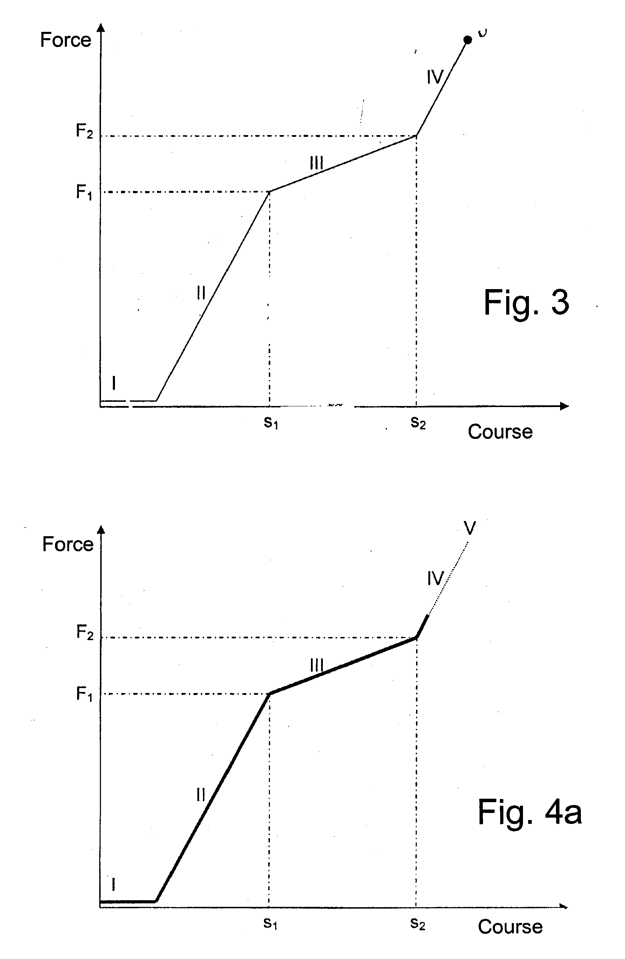

La figure 3 représente la caractéristique générale de fonctionnement d'un frein de stationnement automatique selon l'invention appliqué à un frein à disques. Elle représente la variation de la force appliquée par les patins de frein à un disque de freinage en fonction de la course de déplacement du dispositif de transmission de forces.

Les mesures de forces ont été obtenues par des mesures du courant d'alimentation du moteur électrique de commande.

Cette courbe peut être divisées en cinq régions différentes référencées I à V.

La force F1 correspond à la pré charge du dispositif à ressort qui peut être définie comme étant égale à la force de freinage minimale exigée pour garantir une immobilisation du véhicule.

La force F2 est le niveau de force à la compression maximum du dispositif à ressort 28 (rondelle à la deuxième butée 32).

La course S1-S2 représente la compression maximum du dispositif à ressort déterminée par la deuxième butée 32. Cette course est déterminée pour chaque cas d'application de sorte que la compression du dispositif à ressort soit suffisante pour compenser la course due à la relaxation thermique de la chaîne cinématique. La force de l'élément à ressort à la deuxième butée 32 est donc ajustée avec l'exactitude nécessaire à la conception et/ou à la fabrication du véhicule.

Dans la région I la force est très basse puisqu'elle correspond à la course morte du système de freinage qui doit être surmontée.

Dans la région II la force générée par le frein de stationnement est inférieure à la valeur de la pré charge du dispositif à ressort. Le comportement du système de freinage de stationnement est déterminé par l'élasticité des étriers de frein et le dispositif à ressort n'a pas d'influence.

Quand la force appliquée atteint la valeur de la pré charge F1 du dispositif à ressort, celui-ci commence à être comprimée jusqu'à atteindre la région III.

Dans la région III, apparaît un changement apparent de l'élasticité de la chaîne de freinage et on constate de ce fait un changement significatif de la pente de la courbe par rapport à la pente de la région II.

Quand la force appliquée atteint le niveau de compression maximum du dispositif à ressort (aucune autre compression du ressort n'est maintenant possible) le système arrive dans à la région IV.

Dans la région IV le dispositif à ressort ne modifie pas le comportement du système de freinage et ce comportement est déterminé encore principalement par l'élasticité des étriers du frein à disque.

Si la force produite par l'élément de commande du frein de stationnement (moteur électrique par exemple) augmente jusqu'à atteindre sa valeur maximale (par exemple jusqu'à caler le moteur de commande) on arrive au point V où il ne peut plus fournir d'augmentation de force ni de course.

La caractéristique représentée sur la figure 3 permet une commande de force en circuit fermé sans besoin d'un capteur direct de force, puisque les deux points de changement d'élasticité sont clairement identifiables en contrôlant la pente de la fonction indirecte de mesure de force, par exemple la mesure du courant d'alimentation du moteur électrique de commande. Toutefois, la mise en oeuvre d'un dispositif de mesure de force 42 ne sort pas du cadre de la présente invention.

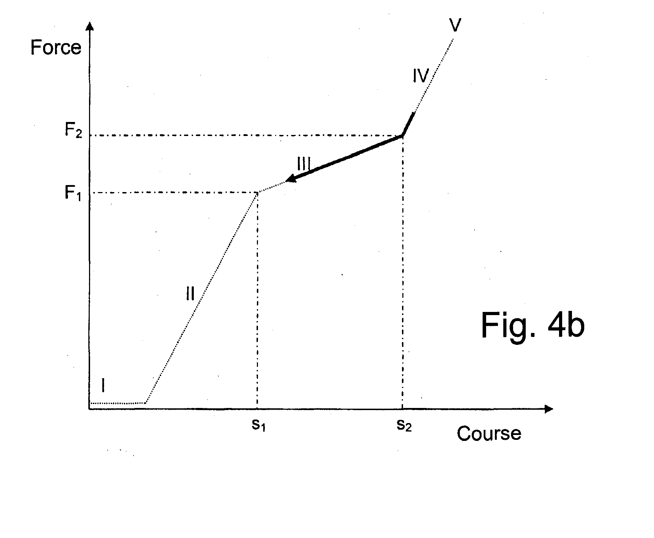

La figure 4a représente la mise en fonctionnement d'un frein de stationnement automatique et la figure 4b représente le fonctionnement pendant la relaxation thermique du dispositif de freinage.

Sur la figure 4a, la force est augmentée jusqu'à ce que le deuxième point de changement de pente, après la région III, soit identifiée lors de la mesure indirecte de la force, c'est-à-dire par la mesure du courant d'alimentation du moteur électrique. Dès que ce deuxième point de changement de pente est atteint l'augmentation de force est arrêtée. De cette façon on garantit que la force de freinage restera au-dessus de la valeur de freinage exigée et restera de force égale même après relaxation thermique.

La deuxième butée 32 du dispositif à ressort est déterminée de sorte que la compression correspondante du dispositif à ressort soit suffisante pour compenser la course due à la relaxation thermique.

La figure 4b représente le comportement du système et notamment la course du dispositif de freinage lors du refroidissement. En raison de la rétractation des garnitures et du disque dû à ce refroidissement, la course et la force de freinage diminuent mais sont limitées par l'expansion du dispositif à ressort de sorte que la force de freinage reste toujours au-dessus de la valeur de freinage exigée F1.

Les valeurs des forces correspondant aux deux butées du dispositif à ressort sont connues très exactement (par exemple pendant le pré réglage). Ces butées peuvent être employées pour calibrer la fonction indirecte de mesure de force pendant chaque application spécifique.

La courbe de fonctionnement ainsi décrite permet également la surveillance des composants de la chaîne de frein de stationnement: le rapport entre les valeurs de forces aux deux points de changement de pentes lors de la mesure indirecte de la force correspond au rapport de la pré charge à la charge finale du dispositif à ressort. Les valeurs mesurées ainsi que leur rapport peuvent être stockées dans une mémoire et être comparés aux rapports prévus. De cette façon les changements possibles du dispositif à ressort peuvent être surveillés.

Certains modes de défaillances peuvent être surveillés au moyen de la caractéristique représentée par les figures 4a et 4b. Notamment, si aucun changement de pente n'est identifié, cela veut dire que le dispositif à ressort n'agit plus en tant que composant élastique ou que la force maximale produite par le dispositif de commande de freinage du moteur (dispositif de traction dans un système à câbles par exemple) est inférieure à la pré charge du dispositif à ressort.

Si un seul point de changement de pente est identifié cela peut vouloir dire que l'élasticité du dispositif à ressort est changée ou que la force produite par le dispositif de commande est une force maximale qui est supérieure à la pré charge mais inférieure à la charge maximale du dispositif à ressort. Si en effet le rapport entre les valeurs fonctionnelles aux points de changements de pentes est changé, cela peut vouloir dire que la pré charge du dispositif à ressort est changée, ou que l'élasticité du dispositif à ressort est changée, ou encore que la charge finale du dispositif à ressort est changée. Si une valeur absolue fonctionnelle est changée sensiblement (relativement aux valeurs stockées) la raison pourrait être soit un changement dans la caractéristique du dispositif produisant la force de freinage, soit un changement de la pré charge du dispositif à ressort ou de l'élasticité du dispositif à ressort.

Avantageusement, toute défaillance détectée est signalée au conducteur par l'allumage, par exemple, d'un témoin lumineux au tableau de bord.

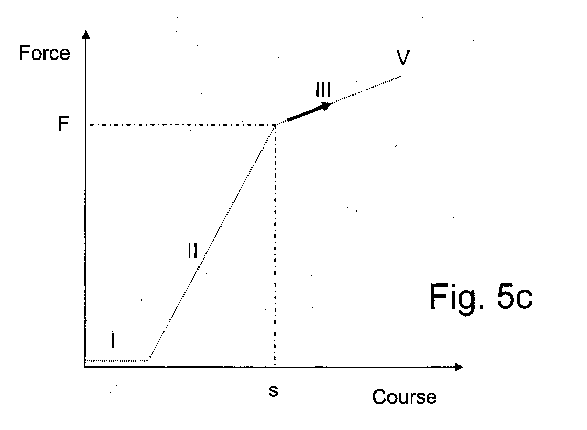

Les figures 5a à 5c décrivent le fonctionnement d'un dispositif à ressort avec une butée pour un frein de parking agissant sur des freins à tambours. La figure 5a représente la caractéristique générale et les figures 5b et 5c représentent respectivement le comportement pendant l'actionnement du frein de stationnement et pendant le processus de relaxation thermique.

De façon générale, la description précédente des figures 3, 4a et 4b est applicable aux figures 5a à 5c.

La caractéristique de la figure 5a peut être divisée en quatre régions différentes référencées I, II, III et V. Ces régions sont obtenues par une mesure indirecte de la force (par exemple par la mesure du courant du moteur de commande).

La force F1 correspond à la pré charge du dispositif à ressort qui peut être égale à la force de freinage exigée pour chaque application.

Les régions I à III sont identiques à celles de la figure 3 et la description ci-dessus de ces régions est également valide dans ce mode d'application à un frein à tambour.

En raison de l'absence de la limitation de la course du dispositif à ressort relativement à la disposition de la figure 3, la région IV n'est pas présente dans cette caractéristique. La région III continue jusqu'à ce que le moteur fournisse sa force maximale, par exemple. Dans ce cas, aucune autre augmentation de force ni augmentation de course du ressort n'est possible lorsque la région V est atteinte.

La figure 5b montre les courbes de la force en fonction de la course pendant un cycle d'application du frein de stationnement. Dès que le changement de la pente au niveau de la force F est atteint le cycle d'application peut être arrêté. Une commande autonome de la force sans besoin d'un capteur directe de force est donc possible. De cette façon, on garantit que la force de freinage est atteinte.

La figure 5c montre le comportement de la force en fonction de la course pendant la relaxation thermique. En raison de la rétractation du diamètre du tambour la force de freinage est augmentée mais limitée par la compression du dispositif à ressort de sorte que la force de freinage reste toujours inférieure à la valeur maximale de force qui est déterminée par la compression maximale du dispositif à ressort due à la relaxation thermique.

Puisque la pré charge du dispositif à ressort est connue avec exactitude (par exemple lors de la procédure de pré réglage du dispositif à ressort) il peut être possible de calibrer la fonction de mesure indirecte de la force de commande de freinage pour chaque type d'application.

La caractéristique de la figure 5a permet le contrôle des composants de la chaîne de frein de stationnement. En effet, le point de changement de la pente est identifiable aussi bien lors de l'actionnement du frein de stationnement que lors de la libération. Les différences liées à l'hystérésis du système peuvent apparaître entre l'actionnement et la libération du frein de stationnement. Cette hystérésis peut être contrôlée.

Comme précédemment, différents modes de défaillances peuvent être surveillés au moyen de la caractéristique de la figure 5a.

Si aucun changement de pente n'est identifié, cela peut signifier que le dispositif à ressort n'agit plus en tant que composant élastique, ou que le dispositif générateur de la force de freinage (moteur) génère une force maximum qui est inférieure à la pré charge du dispositif à ressort. Si la valeur absolue de la valeur fonctionnelle est changée sensiblement (relativement aux valeurs enregistrées) la raison pourrait être un changement de la caractéristique du générateur de force de freinage ou de la pré charge du dispositif à ressort.

L'utilisation du ressort compensateur et le rendement élevé des réducteurs permettent de réaliser une bonne répétitivité de la force de freinage en utilisant pour la détection de force, la détection (peu coûteuse) du courant moteur. La mesure de courant pourra être calibrée à chaque cycle d'actionnement par l'intermédiaire de la détection du changement de pente de la caractéristique de fonctionnement du système.

## Revendications

1. Système de commande frein de stationnement comprenant au moins deux câbles (13 et 14) destinés chacun à communiquer une force de commande à un dispositif de freinage d'un véhicule, un moteur (1) étant prévu pour communiquer des forces de traction auxdits câbles (13, 14) par l'intermédiaire d'un dispositif de traction réducteur de vitesse (40), **caractérisé en ce que** ledit dispositif de traction réducteur de vitesse (40) n'est pas fixé de manière rigide au véhicule et **en ce que** ledit dispositif de traction (40) est ancré au châssis du véhicule, et est mobile selon une direction linéaire.

2. Système de commande de frein selon la revendication **1, caractérisé en ce que** ledit dispositif de traction est ancré au train arrière du véhicule.

3. Système de commande de frein selon la revendication 1, **caractérisé en ce que** ledit dispositif de traction comporte un système de traction à double poulies ainsi qu'un système de réduction de vitesse par engrenages situé à l'intérieur des poulies.

4. Système de commande de frein selon la revendication 1, **caractérisé en ce qu'**une traction sur un premier desdits câbles est commandé par son enroulement sur une première poulie.

5. Système de commande de frein selon la revendication 4, **caractérisé en ce que** le deuxième desdits câble est fixé au boîtier du dispositif de traction.

6. Système de commande de frein selon la revendication 4, **caractérisé en ce qu'**une traction sur le deuxième desdits câbles est commandé par son enroulement sur une deuxième poulie.

7. Système de commande de frein selon la revendication 4, **caractérisé en ce que** la première et la deuxième poulies sont coaxiales.

8. Système de commande de frein selon la revendication 1, **caractérisé en ce que** ledit moteur électrique (1) est couplé audit dispositif de traction (40) par l'intermédiaire d'un système d'engrenages coniques.

9. Système de commande de frein selon la revendication 8, **caractérisé en ce que** l'arbre dudit moteur possède une engrenage conique (5) qui entraîne une couronne tronc conique dentée (4).

10. Système de commande de frein selon la revendication 1, **caractérisé en ce qu'**un dispositif à ressort (41) est inséré dans la chaîne de transmission des forces de freinage, et **en ce que** le dispositif à ressort est pré chargé à une valeur de force correspondant à la force de freinage minimale exigée.

11. Système de commande de frein selon la revendication 1, **caractérisé en ce que** ledit dispositif à ressort (41) est inséré sur l'un desdits câble.

12. Système de commande de frein selon la revendication 1, **caractérisé en ce que** ledit dispositif à ressort (41) comporte un boîtier cylindrique (28) contenant un ressort (29) situé selon l'axe du boîtier entre une première extrémité et une deuxième extrémité du boîtier, la première extrémité possédant un bouchon (33) à travers lequel passe un câble (14) et une extrémité de la gaine dudit câble, le ressort (29) étant en appui sur une rondelle (34) mobile axialement et s'appuyant elle-même sur le bouchon (33) ou sur ladite extrémité de gaine (30), le bouchon ou la gaine formant une première butée, la deuxième extrémité du boîtier possédant un couvercle (31) mobile axialement pour régler la pré charge du ressort (29) en coopération avec la première butée.

13. Système de commande de frein selon la revendication 12, **caractérisé en ce que** le couvercle (31) est vissé sur la deuxième extrémité du boîtier.

14. Système de commande de frein selon la revendication 12, **caractérisé en ce que** le boîtier comporte une deuxième butée (32) permettant de limiter le déplacement de la rondelle (34) en mode compression.

15. Système de commande de frein selon l'une quelconque des revendications précédentes, **caractérisé en ce que** ledit frein est un frein de stationnement automatique.

16. Système de commande de frein selon l'une quelconque des revendications précédentes, **caractérisé en ce que** les dispositifs de freinage sur lesquels agit ledit frein de stationnement sont des freins à disques.

17. Système de commande de frein selon l'une quelconque des revendications 1 à 15, **caractérisé en ce que** les dispositifs de freinage sur lesquels agit ledit frein de stationnement sont des freins à tambours.
